# EUROPÄISCHE PATENTANMELDUNG

(11) **EP 3 190 549 A1**
(43) Veröffentlichungstag der Anmeldung: **12.07.2017**
(21) Anmeldenummer: 16020524.1
(22) Anmeldetag: 31.12.2016
(51) Int. Cl.: G06Q 10/02

(54) **VORRICHTUNG UND VORRICHTUNG ZUR KONTROLLE VON E-TICKETS**

(30) Priorität: 07.01.2016 CH 182016
(71) Anmelder: Saner, Martin, 8624 Grüt (CH)
(72) Erfinder: Saner, Martin, 8624 Grüt (CH)

(57) **Zusammenfassung**

Die Erfindung ermöglicht die Kontrolle von E-Tickets durch die Reisenden selbst. Die erfindungsgemässe Vorrichtung weist bei Sitzplätzen (9) eines Verkehrsmittels (10) elektronisch lesbare Sitzplatznummern auf, sogenannte Sitzplatz-Tags (1). Die Reisenden registrieren sich selber an einem Sitzplatz (9), indem sie auf ihrem Smartdevice (2) eine entsprechende App starten und dieses Smartdevice (2) in die Nähe des Sitzplatz-Tags (1) bringen. Das Smartdevice (2) liest die Sitzplatznummer vom Sitzplatz-Tag (1) und sendet sie zusammen mit den relevanten Daten des E-Tickets drahtlos an ein Kontrollgerät (3) innerhalb des Verkehrsmittels (10). Das Kontrollgerät (3) ist mit einer zentralen Datenbank (6) verbunden. Für jeden Sitzplatz (9) bestimmt das Kontrollgerät (3) die Gültigkeit des eingelesenen E-Tickets durch einen Datenbankabruf. Das Kontrollgerät (3) übermittelt den Gültigkeitsstatus des E-Tickets auf das entsprechende Smartdevice (2) selbst und auf verschiedene Anzeigegeräte (4, 5, 7), nämlich eine Anzeigevorrichtung (4) bei jedem Sitzplatz (9), ein Gesamtdisplay (5) oder auf ein Mobilgerät (7) des Kontrollpersonals.

## Beschreibung

### Technisches Gebiet

Die Erfindung betrifft ein Verfahren und eine zugehörige Vorrichtung zur effizienten Kontrolle von elektronisch gespeicherten Tickets, sogenannten E-Tickets, insbesondere in Verkehrsmitteln des öffentlichen Verkehrs.

### Stand der Technik

Es gibt zwei verschiedene Formen von E-Tickets:
a) *Physische* E-Tickets, beispielsweise in Form eines auf einer Smartcard gespeicherten Datensatzes.
b) *Logische* E-Tickets in Form eines Datensatzes auf einem beliebigen elektronischen Gerät.

Physische E-Tickets sind beispielsweise die *Oyster-Card* in London oder der *SwissPass* der Schweizerischen Bundesbahnen (SBB).

Logische E-Tickets können mit Hilfe einer Softwareapplikation, einer sogenannten App, vor dem Antritt einer Fahrt gekauft und auf einem Smartdevice gespeichert werden. Unter Smartdevices sind hier Smartphones, Tablets, Smartwatches sowie alle weiteren elektronischen Geräte mit einer vergleichbaren Funktionalität zu verstehen. In der Regel wird dieses E-Ticket auch in einer zentralen Datenbank gespeichert.

Eine solche App, wie beispielsweise die App "SBB Mobile" der SBB oder die App "DB Navigator" der Deutschen Bahn, bietet dem Reisenden verschiedene Reiseinformationen und erlaubt es ihm, über das Internet ein E-Ticket für eine gewünschte Fahrt zu kaufen. Die App speichert dabei im Verlauf des Kauf- und Übertragungs-Vorganges die Informationen des gekauften E-Tickets auf dem Smartdevice des Reisenden und bucht automatisch auch den Fahrpreis von einem Konto des Reisenden ab.

Ein E-Ticket kann, unabhängig von seiner Form (physisch oder logisch), zu einer der folgenden vier Kategorien gehören:
- **Kategorie 1**: E-Ticket für die Fahrt von A nach B, einfach oder retour.
- **Kategorie 2**: E-Ticket für unbeschränkte Fahrten in einem bestimmten Gebiet in einem bestimmten Zeitraum. Beispiele sind Zonenabonnemente, Tickets für freie Fahrt zu einer bestimmten Tageszeit oder das Generalabonnement der SBB für freie Fahrt innerhalb der Schweiz für ein ganzes Jahr.
- **Kategorie 3**: Prepaid-Ticket: Das E-Ticket ist verbunden mit einem Guthabenkonto des Reisenden beim jeweiligen Transportunternehmen. Auf dem Konto muss ein gewisser Minimalbetrag vor Antritt der Fahrt vorhanden sein. Ein Prepaid-Ticket kann persönlich oder unpersönlich sein.
   Ein unpersönliches Prepaid-Ticket, gekauft als Wertkarte ohne Registrierung der Personalien, ermöglicht das anonyme Reisen.
- **Kategorie 4**: Postpaid-Ticket: Das E-Ticket ist verbunden mit einer Rechnungsadresse des Reisenden. Die in einer bestimmten Zeitperiode gemachten Fahrten werden in Rechnung gestellt.

Werden gültige E-Tickets der Kategorien 1 und 2 nicht kontrolliert, so entsteht dem Transportunternehmen kein Schaden. E-Tickets der Kategorien 3 und 4 müssen dagegen immer in geeigneter Weise registriert werden, damit die entsprechende Fahrt erfasst wird und verrechnet werden kann.

Die Vorteile von E-Tickets sind bekannt:
- Der Kauf physischer Tickets ist nicht mehr nötig.
- Jedes Smartdevice ist ein persönlicher Ticket-Automat.
- Durch die Kontrolle der E-Tickets lassen sich Daten für die Fahrgaststatistik gewinnen.
- Persönliche E-Tickets können eine unbeschränkte Gültigkeitsdauer haben, wodurch der Aufwand für die periodische Erneuerung entfällt.

Die Nachteile von E-Tickets gegenüber einem konventionellen Ticket aus Papier ergeben sich aus der viel aufwendigeren Kontrolle: Das Kontrollpersonal überprüft physische E-Tickets in Kartenform typischerweise mit einem elektronischen Lesegerät, das über eine Netzwerkverbindung mit einer zentralen Datenbank verbunden ist. Dafür muss dem Kontrollpersonal die zugehörige Karte ausgehändigt werden. Das Kontrollpersonal hält diese Karte an das Lesegerät und kann damit die Gültigkeit des E-Tickets überprüfen. Das Lesegerät verfügt dazu, dem Stand der Technik entsprechend, über Daten, die Aufschluss über die Position des Verkehrsmittels zum Zeitpunkt der Kontrolle im Lesegerät geben, sei dies über eine Anfrage bei der Datenbank, über eine Abfrage eines Zugleitsystems oder über eine Abfrage eines satellitengestützten Positionierungssystems wie beispielsweise GPS, GLONASS oder GALILEO.

Ähnlich aufwendig ist die Kontrolle logischer E-Tickets: Zur Kontrolle von E-Tickets, die auf einem Smartdevice gespeichert sind, müssen die Reisenden die entsprechende App auf ihrem Smartdevice starten und anschliessend dieses Smartdevice dem Kontrollpersonal übergeben. Das Smartdevice wird dann vor das Lesegerät des Kontrollpersonal gehalten und das Kontrollpersonal kann nun wiederum die Gültigkeit des E-Tickets überprüfen.

Der Nachteil dieser Kontrollen ist, dass sie umständlich sind und erfahrungsgemäss zwei- bis dreimal so lange dauern wie die Kontrolle eines konventionellen Tickets.

Das Kontrollpersonal wendet so sehr viel Zeit für eine reine Routinetätigkeit auf und hat weniger Zeit für eine vollständige Ticketkontrolle und für die Beratung von Reisenden. Zudem werden die Reisenden durch diese Kontrollen gestört.

Alle diese Nachteile können vermieden werden, wenn die Reisenden die Ticketkontrolle selbst durchführen und das Ergebnis der Kontrolle in geeigneter Weise angezeigt wird.

### Bisherige Lösungsansätze

Es sind verschiedene Verfahren respektive Vorrichtungen bekannt, mit denen die oben genannten Nachteile vermieden werden sollen. Diese Verfahren - bekannt unter der Bezeichnung CIBO (Check-in/Be-out) oder CICO (Check-in/Check-out) - beruhen darauf, dass sich der Reisende an seinem Platz selber registrieren muss und die Gültigkeit seines E-Tickets anschliessend automatisiert überprüft wird:
- In der Patenschrift DE 199 15 537 A1, 7. 4. 1999, *Fahrgast-Erfassungs- und Kontrollsystem,* wird ein Verfahren beschrieben, das auf der Ausrüstung sämtlicher Sitzplätze mit Magnetkartenlesegeräten und Sitzsensoren, welche die Belegung eines Sitzplatzes erfassen, beruht.
- In der Patenschrift DE 10 2005 048 080 A1, 7. 10. 2005, *Verfahren zur Echtzeit-Sitzplatz-Belegung und -Reservierung,* wird ein Verfahren beschrieben, das auf der Ausrüstung sämtlicher Sitzplätze mit RFID-Lese-Vorrichtungen für E-Tickets beruht.
- In der Patenschrift DE 10 2007 058 679 A1, *Fahrkarten-Kontrollanordnung,* wird ein System beschrieben, das aus einer Fahrkartenleseeinrichtung und einem Sitzsensor, der die Belegung eines Sitzplatzes erkennt, besteht.

Diesen drei Ansätzen ist gemeinsam, dass jeder Sitzplatz mit einem Lesegerät und teilweise auch noch mit einem Sitzsensor ausgerüstet werden muss. Dies verursacht einen sehr hohen Aufwand für die Leseeinrichtungen und die Sitzsensoren und für die entsprechende Verkabelung. Eine Nachrüstung bestehender Fahrzeuge ist nur mit hohem Aufwand möglich. Dies dürfte mit ein Grund sein, weshalb sich keines dieser Verfahren bis heute durchgesetzt hat.

Ein anderer Ansatz sind sogenannte BIBO-Systeme (Be-in/Be-out). Sie versprechen einen sehr hohen Komfort für die Reisenden, da diese nur das entsprechende E-Ticket bei sich tragen müssen, sich aber nicht aktiv registrieren müssen. In einem BIBO-System wird das E-Ticket beim Einstieg und beim Ausstieg drahtlos erfasst und die Fahrt so registriert. Dies ist die Grundlage für die spätere Verrechnung. Auch dieser Ansatz hat aber gravierende Nachteile:
- Die drahtlose Erfassung der E-Tickets beim Ein- und Ausstieg verursacht einen relativ hohen Aufwand für die Lesegeräte.
- Das System beruht auf der Annahme, dass die Reisenden ehrlich sind. ist. Unehrliche Reisende schirmen ihr E-Ticket so ab, dass es von den Lesegeräten nicht erfasst werden kann. Bei einer Kontrolle durch eine Kontrollperson können sie geltend machen, die Erfassung habe nicht funktioniert.

### Darstellung der Erfindung

### Das Problem

Gesucht wird ein System für die Ticketkontrolle, insbesondere in Verkehrsmitteln des öffentlichen Verkehrs, bei dem die Reisenden die Ticketkontrolle selbst durchführen und das Ergebnis der Kontrolle für alle Reisenden oder nur für das Kontrollpersonal ersichtlich angezeigt wird.

### Erfindungsgemässe Lösung

Das erfindungsgemässe Verfahren gemäss Patentanspruch 1 und die zugehörige Vorrichtung gemäss Patentanspruch 10 zur Kontrolle von E-Tickets beruht zwar ebenfalls darauf, dass sich der Reisende an seinem Sitzplatz (9) selber registriert. Es erlaubt aber, alle bekannten Vorteile der E-Tickets beizubehalten und gleichzeitig die oben aufgeführten Nachteile zu vermeiden. Dies gilt auch für die weiteren Patentansprüche, mit denen verschiedene günstige Ausgestaltungen der Vorrichtung respektive des Verfahrens beansprucht werden.

Das erfindungsgemässe Verfahren und die zugehörige Vorrichtung sind hier zunächst einmal in Stichworten kurz zusammengefasst angegeben. Sie werden anschliessend detailliert erläutert:
- Es handelt sich um ein sogenanntes CIBO-System (Check-in/Be-out), die Reisenden müssen sich selbst an ihren Sitzplätzen (9) registrieren.
- Das Verfahren beruht massgeblich auf den Smartdevices (2) der Reisenden, als Träger von logischen E-Tickets, als Lesegeräte für physische E-Tickets und als drahtlose Kommunikationsgeräte.
- An den Sitzplätzen (9) sind nur einfache, passive und somit kostengünstige Sitzplatz-Tags (1) erforderlich. Eine Verkabelung zu jedem Sitzplatz (9) wird daher nicht benötigt.
- Im einfachsten Fall müssen für das erfindungsgemässe System nur ein Kontrollgerät (3) und bei jedem Sitzplatz (9) ein Sitzplatz-Tag (1) installiert werden. Optional ist eine Anzeigevorrichtung (4) bei jedem Sitzplatz (9); ebenfalls optional ist ein Gesamtdisplay (5).

### Erfindungsgemässe Vorrichtung

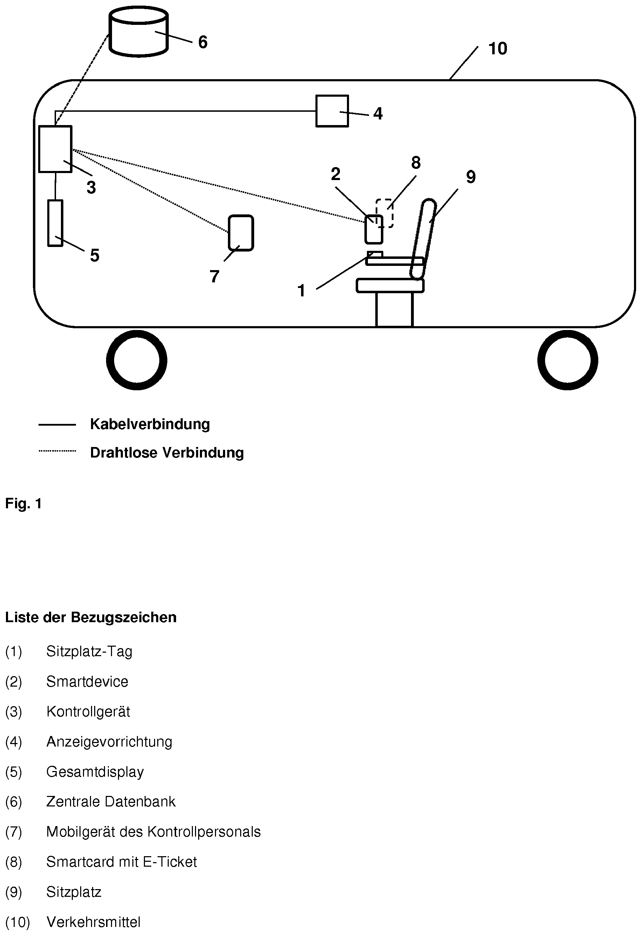

Die erfindungsgemässe Vorrichtung wird an Hand von Fig. 1 hier zunächst kurz erläutert und anschliessend im Detail beschrieben. Sie enthält in einem Verkehrsmittel (10) mit einer Vielzahl von Sitzplätzen (9) die nachfolgend aufgezählten Funktionselemente:
- Sitzplatz-Tag (1)
- Smartdevice (2) des Reisenden
- Kontrollgerät (3)
- Anzeigevorrichtung (4)
- Gesamtdisplay (5)
- Zentrale Datenbank (6)
- Mobilgerät (7) des Kontrollpersonals
- Smartcard (8) mit E-Ticket, sofern das E-Ticket auf einer Smartcard vorliegt.

An jedem Sitz ist eine individuelle, elektronisch lesbare Sitzplatznummer angebracht, welche im folgenden **Sitzplatz-Tag (1)** genannt wird. Der Sitzplatz-Tag (1) kann durch eine beliebige für diesen Zweck bekannte technische Vorrichtung realisiert sein, beispielsweise durch einen NFC-Tag (NFC: Near Field Communication), durch einen RFID-Tag (RFID: Radio Frequency Identification), durch einen QR-Code (QR: Quick Response), durch einen Barcode oder durch eine einfache, optisch lesbare Sitzplatznummer in normaler Schrift.

Der Sitzplatz-Tag (1) kann auch durch eine Kombination von zwei oder mehreren solcher Vorrichtungen realisiert sein, beispielsweise durch die Kombination eines NFC-Tags mit einem zusätzlichen QR-Code oder durch die Kombination eines NFC-Tags mit einem zusätzlichen Barcode. Der Sitzplatz-Tag (1) kann beispielsweise auf der Armlehne angebracht sein oder in die Armlehne integriert sein. Er kann so ausgestaltet sein, dass er gegen Vandalismus geschützt ist.

Für die Kontrolle eines logischen E-Tickets, das auf einem **Smartdevice (2)** eines Reisenden gespeichert ist, muss dieses Smartdevice (2) in der Lage sein, einen Sitzplatz-Tag (1) auf mindestens eine Weise zu lesen, Daten drahtlos an ein Kontrollgerät (3) zu senden und Daten drahtlos von diesem Kontrollgerät (3) zu empfangen.

Für die Kontrolle eines physischen E-Tickets muss dieses Smartdevice (2) zusätzlich relevante Informationen eines physischen E-Tickets, welches beispielsweise auf einer Smartcard (8) gespeichert ist, lesen können, was mit Hilfe einer dazu geeigneten, auf dem Smartdevice (2) gespeicherten App des Transportunternehmens geschehen kann.

Alle diese Anforderungen entsprechen dem heutigen Stand der Technik in praktisch jedem Smartdevice. Sämtliche oben genannten Funktionen werden mit Hilfe einer entsprechend programmierten App realisiert.

Weiter ist im Verkehrsmittel ein **Kontrollgerät (3)** vorhanden. Es ist an einer geeigneten Stelle im Verkehrsmittel angebracht, beispielsweise an der Decke oder an einer Wand. Es enthält Mittel, mit welchen es drahtlos mit dem Smartdevice (2) kommunizieren kann, eine Rechnereinheit und lokalen Speicher sowie Mittel, mit denen eine Abfrage in einer ebenfalls vorhandenen zentralen Datenbank (6) über eine geeignete Netzwerkverbindung vorgenommen werden kann.

Eine **zentrale Datenbank (6)** enthält Daten zu allen ausgestellten E-Tickets. Sie ist über eine geeignete drahtlose Netzwerkverbindung mit dem Kontrollgerät (3) im Verkehrsmittel verbunden. Das Kontrollgerät (3) enthält ausserdem Datenverarbeitungsmittel, mit denen mit Hilfe eines Vergleichs der Daten aus dem Smartdevice (2) mit den Daten aus der Datenbank (6) festgestellt werden kann, ob das vorliegende E-Ticket gültig ist, sowie Mittel, um die Information über die Gültigkeit dieses E-Tickets an weitere vorhandene Vorrichtungen weiterleiten zu können.

Weiter ist mindestens ein Anzeigegerät (2, 4, 5, 7) vorhanden, das Mittel enthält, um die im Kontrollgerät (3) vorliegende Information über die Gültigkeit dieses E-Tickets zu empfangen und in geeigneter Form darzustellen.

In einer ersten erfindungsgemässen Ausgestaltung ist dieses Anzeigegerät (2, 4, 5, 7) das **Smartdevice (2)** des Reisenden. Es empfängt drahtlos vom Kontrollgerät (3) die vorliegende Information über die Gültigkeit dieses E-Tickets und stellt sie in geeigneter Form dar, beispielsweise mittels einer Textmeldung GÜLTIG auf grünem Hintergrund.

In einer zweiten erfindungsgemässen Ausgestaltung ist dieses Anzeigegerät (2, 4, 5, 7) in Form einer **Anzeigevorrichtung (4)** bei jedem Sitz vorhanden. Sie dient dazu, den Reisenden und dem Kontrollpersonal anzuzeigen, dass ein E-Ticket auf dem zugehörigen belegten Sitz gültig ist. Sie kann beispielsweise aus einer LCD-Anzeige bestehen oder aus einer oder mehreren LEDs, die bei jedem Sitzplatz (9) angebracht sind. Sie kann auch mittels Multicolor-LEDs realisiert werden. Wenn für einen Sitzplatz (9) ein gültiges E-Ticket registriert wurde, kann dieser Zustand beispielsweise durch eine grün leuchtende LED signalisiert werden.

In einer dritten erfindungsgemässen Ausgestaltung ist dieses Anzeigegerät (2, 4, 5, 7) in der Form eines **Gesamtdisplays (5)** vorhanden. Dieses Gesamtdisplay (5) ist ans Kontrollgerät (3) angeschlossen. Es zeigt den Status aller Sitzplätze (9) zentral an. Ein solches Gesamtdisplay (5) kann öffentlich oder aber nur für das Kontrollpersonal einsehbar ausgestaltet sein. Das Gesamtdisplay (5) kann als LED-Display oder - wie bei der Anzeigevorrichtung (4) - beispielsweise mittels LCDs oder LEDs oder in anderer geeigneter Weise realisiert sein.

In einer vierten erfindungsgemässen Ausgestaltung ist dieses Anzeigegerät (2, 4, 5, 7) in der Form eines **Mobilgeräts des Kontrollpersonals (7)** vorhanden. Dieses Mobilgerät (7) enthält Verbindungsmittel, mit welchen es mit dem Kontrollgerät (3) bidirektional drahtlos kommunizieren und den Status aller Sitzplätze (9) zentral anzeigen kann. Diese Anzeige ist aber nur für das Kontrollpersonal einsehbar.

Ebenfalls erfindungsgemäss ist es, diese Anzeigegeräte (2, 4, 5, 7) bei der Durchführung des erfindungsgemässen Verfahrens beliebig zu zweit, zu dritt oder aber alle vier miteinander zu kombinieren.

### Erfindungsgemässes Verfahren

### Kontrolle logischer E-Tickets

Das erfindungsgemässe **Verfahren** für die Kontrolle eines logischen E-Tickets, ausgestellt durch ein Verkehrsunternehmen und gespeichert auf einem Smartdevice (2), wird ebenfalls an Hand von Fig. 1 erläutert. Das Verfahren enthält folgende Schritte:
- Ein Reisender setzt sich auf einen freien Sitzplatz (9) eines Verkehrsmittels (10) dieses Verkehrsunternehmens.
- Um sich für diesen Sitzplatz (9) zu registrieren, startet er eine von diesem Verkehrsunternehmen zur Verfügung gestellte App auf seinem Smartdevice (2) und berührt damit den Sitzplatz-Tag (1), der zu seinem Sitzplatz (9) gehört. Dadurch wird vom Smartdevice (2) die eindeutige Sitzplatznummer gelesen.
- Sofern dies vom Betriebssystem des Smartphones (2) unterstützt wird, startet allein schon das Berühren des Sitzplatz-Tags (1) die entsprechende App.
- Das Smartdevice (2) übermittelt anschliessend die relevanten Daten des E-Tickets und die Sitzplatznummer drahtlos an das Kontrollgerät (3).
- Das Kontrollgerät (3) überprüft die Gültigkeit des E-Tickets, lokal oder durch Online-Abfrage in einer zentralen Datenbank (6).
- Ist das E-Ticket gültig, dann wird auf einem Anzeigegerät (2, 4, 5, 7) der Zustand GÜLTIG angezeigt, beispielsweise durch eine grüne LED, oder durch andere bekannte, bereits oben erwähnte Verfahren respektive Vorrichtungen.
   ▪ In einer ersten Ausgestaltung des Verfahrens ist dieses Anzeigegerät (2, 4, 5, 7) das entsprechende Smartdevice (2), das eine Bestätigungsmeldung GÜLTIG des Kontrollgeräts (3) empfängt und darstellt.
   ▪ In einer zweiten Ausgestaltung des Verfahrens ist dieses Anzeigegerät (2, 4, 5, 7) eine beim entsprechenden Sitzplatz (9) angebrachte Anzeigevorrichtung (4), die beispielsweise durch eine grüne LED realisiert sein kann.
   ▪ In einer dritten Ausgestaltung des Verfahrens ist dieses Anzeigegerät (2, 4, 5, 7) ein Gesamtdisplay (5), welches für mehrere oder alle Sitzplätze (9) gleichzeitig und übersichtlich anzeigt, ob ein gültiges E-Ticket registriert wurde, beispielsweise durch ein grünes Symbol für ein gültiges E-Ticket. Das Gesamtdisplay (5) kann dabei für jedermann oder aber nur für das Kontrollpersonal einsehbar sein.
   ▪ In einer vierten Ausgestaltung des Verfahrens ist dieses Anzeigegerät (2, 4, 5, 7) ein Mobilgerät (7) des Kontrollpersonals, auf dem der Zustand GÜLTIG für jeden Sitzplatz (9) einzeln oder für mehrere Sitzplätze (9) zusammen angezeigt wird, beispielsweise durch ein grünes Symbol.
- Ebenfalls erfindungsgemäss ist es, diese Anzeigegeräte (2, 4, 5, 7) bei der Durchführung des erfindungsgemässen Verfahrens beliebig zu zweit, zu dritt oder aber alle vier miteinander zu kombinieren.

Je nach Kategorie des E-Tickets ergibt sich folgender weiterer Ablauf:

### Kategorie 1: E-Ticket von A nach B

- Das Kontrollgerät (3) übermittelt den Zustand GÜLTIG, wenn das E-Ticket gemäss den Bestimmungen des Verkehrsunternehmens für die Fahrt gültig ist.
- Beim Halt in B erlischt die GÜLTIG-Anzeige.
- Bei der Rückfahrt von B nach A gilt der gleiche Ablauf sinngemäss.

### Kategorie 2: E-Ticket für unbeschränkte Fahrten

- Das Kontrollgerät (3) übermittelt den Zustand GÜLTIG, wenn das E-Ticket gemäss den Bestimmungen des Verkehrsunternehmens für die Fahrt gültig ist.
- Die GÜLTIG-Anzeige bleibt bestehen, solange das Kontrollgerät (3) vom Smartdevice (2) in regelmässigen Zeitabständen, beispielsweise alle 60 s, eine sogenannte HELLO-Meldung empfängt. Solche HELLO-Meldungen von Smartdevices sind bekannt. Sie können beispielsweise als Bluetooth- oder WLAN-Beacon-Meldungen ausgesandt werden. Der Empfang einer HELLO-Meldung bedeutet, dass das entsprechende E-Ticket sich noch im Verkehrsmittel (10) befindet.
- Bleiben die HELLO-Meldungen aus, weil der Reisende das Verkehrsmittel verlassen hat, so wird die GÜLTIG-Anzeige für den entsprechenden Sitzplatz (9) gelöscht.

### Kategorie 3: Prepaid-Ticket

- Das Kontrollgerät (3) übermittelt den Zustand GÜLTIG, wenn das E-Ticket gemäss den Bestimmungen des Verkehrsunternehmens für die Fahrt bis zur nächsten Haltestelle gültig ist.
- Die GÜLTIG-Anzeige bleibt bestehen, solange das Kontrollgerät (3) vom Smartdevice (2) in regelmässigen Zeitabständen, beispielsweise alle 60 s, eine sogenannte HELLO-Meldung erhält. Dies bedeutet, dass das entsprechende E-Ticket sich noch im Verkehrsmittel (10) befindet.
- Bleiben die HELLO-Meldungen des Smartdevices (2) aus, weil der Reisende das Verkehrsmittel verlassen hat, so wird die GÜLTIG-Anzeige für den entsprechenden Sitzplatz (9) gelöscht.
- Das Kontrollgerät (3) übermittelt die relevanten Daten des E-Tickets und die Fahrstrecke an die zentrale Datenbank (6). Diese reduziert das Guthaben des Reisenden um den Fahrpreis für die registrierte Fahrt.

### Kategorie 4: Postpaid-Ticket

- Das Kontrollgerät (3) übermittelt den Zustand GÜLTIG, wenn das E-Ticket gemäss den Bestimmungen des Verkehrsunternehmens für die Fahrt gültig ist.
- Die GÜLTIG-Anzeige bleibt bestehen, solange das Kontrollgerät (3) vom Smartdevice (2) in regelmässigen Zeitabständen, beispielsweise alle 60 s, eine sogenannte HELLO-Meldung erhält. Dies bedeutet, dass das entsprechende E-Ticket sich noch im Verkehrsmittel befindet.
- Bleiben die HELLO-Meldungen des Smartdevices (2) aus, weil der Reisende das Verkehrsmittel (10) verlassen hat, so wird die GÜLTIG-Anzeige für den entsprechenden Sitzplatz (9) gelöscht.
- Das Kontrollgerät (3) übermittelt die relevanten Daten des E-Tickets und die Fahrstrecke an die zentrale Datenbank (6). Diese speichert den Datensatz für die spätere Rechnungsstellung.

### Kontrolle physischer E-Tickets

Das erfindungsgemässe Verfahren für die Kontrolle eines physischen E-Tickets, welches beispielsweise auf einer Smartcard (8) gespeichert ist, ist gleich wie das oben beschriebene Verfahren für die Kontrolle eines bereits auf dem Smartdevice (2) gespeicherten *logischen* E-Tickets, abgesehen von der folgenden Änderung:
Vorgängig zu dem oben beschriebenen Verfahren für die Kontrolle eines logischen E-Tickets wird zuerst die Smartcard (8) mit dem E-Ticket in unmittelbare Nähe des Smartdevice (2) gebracht, so dass das Smartdevice (2) die in der Smartcard (8) gespeicherten Informationen des E-Tickets lesen kann. Bei einem Smartphone kann sich die Smartcard (8) beispielweise in der Hülle des Smartphones (2) befinden.

Um sich für einen Sitzplatz (9) zu registrieren, startet der Reisende ebenfalls die von diesem Verkehrsunternehmen zur Verfügung gestellte App auf seinem Smartdevice (2) und berührt damit den Sitzplatz-Tag (1), der zu seinem Sitzplatz (9) gehört. Dadurch werden vom Smartdevice (2) die eindeutige Sitzplatznummer und gleichzeitig die in der Smartcard (8) gespeicherten relevanten Daten des E-Tickets gelesen. Sofern dies vom Betriebssystem unterstützt wird, startet auch in diesem Fall das Berühren des Sitzplatz-Tags (1) die entsprechende App.

Das weitere Verfahren ist gleich wie das oben beschriebene Verfahren zur Kontrolle eines logischen E-Tickets.

### Spezialfälle

Die Software des Kontrollgeräts (3) kann so ausgebildet sein, dass auch Spezialfälle sinnvoll behandelt werden können:
- **Stehplatz:** Reisende, die nur einen Stehplatz erhalten, registrieren ihr E-Ticket an einem zentralen Punkt in der Nähe des Einstiegs. Dies ist erforderlich für E-Tickets der Kategorien 3 und 4 (Prepaid- und Postpaid-Tickets). Ist ihr Ticket gültig, so erhalten sie ebenfalls eine GÜLTIG-Meldung des Kontrollgeräts (3) auf ihr Smartdevice (2). Ebenso wird die Registrierung ihres E-Tickets auf mindestens einem der Anzeigegeräte (5, 7) angezeigt.
- **Platzwechsel:** Wechselt ein Reisender seinen Sitzplatz (9) innerhalb des Verkehrsmittels (10), so löscht die Registrierung am neuen Sitzplatz (9) die alte Registrierung. Auf den Anzeigegeräten (2, 4, 5, 7) wird am neuen Sitzplatz (9) GÜLTIG signalisiert, am alten Sitzplatz (9) wird die Anzeige gelöscht.
- **Kurzfristiges Verlassen**: Verlässt ein Reisender seinen Sitzplatz (9) kurzfristig, so bleibt die GÜLTIG-Anzeige bestehen, und zwar
   ▪ für E-Tickets der Kategorie 1 in jedem Fall
   ▪ für E-Tickets der Kategorien 2, 3 und 4,
      wenn die HELLO-Meldungen des Smartdevices (2) weiterhin vom Kontrollgerät (3) empfangen werden.

## Patentansprüche

1. **Verfahren** zur Kontrolle von E-Tickets von Reisenden in einem Verkehrsmittel (10), dessen Position mit Hilfe geeigneter Mittel wie eines Zugleitsystems, einer Abfrage in einer Datenbank (6) oder über ein satellitengestütztes Positionierungssystem bekannt ist, mit einer Vielzahl von Sitzplätzen (9), welche alle je individuell mit einem elektronisch lesbaren Sitzplatz-Tag (1) bezeichnet sind, unter Verwendung eines Smartdevices (2), auf dem eine Software-Applikation (App) gespeichert ist, mit deren Hilfe das Smartdevice (2) auf die relevanten Daten eines E-Tickets eines Reisenden zugreifen kann,
**dadurch gekennzeichnet, dass**
- das Smartdevice (2) in die Nähe des jeweiligen Sitzplatz-Tags (1) gebracht wird und mit Hilfe dieser App beim jeweiligen Sitzplatz (9) den Sitzplatz-Tag (1) elektronisch einliest,
- das Smartdevice (2) mit Hilfe dieser App relevante Daten dieses E-Tickets drahtlos mit einem im Verkehrsmittel (10) vorhandenen Kontrollgerät (3) austauscht,
- dieses Kontrollgerät (3) über eine geeignete Netzwerkverbindung mit einer zentralen Datenbank (6) Daten über die Gültigkeit dieses E-Tickets austauscht,
- dieses Kontrollgerät (3) aus einer Kombination der vom jeweiligen Smartdevice (2) erhaltenen Daten mit den Daten aus der zentralen Datenbank (6) und den bekannten Daten über die Position des Verkehrsmittels feststellt, ob das jeweils vorliegende E-Ticket auf dem betreffenden Streckenabschnitt gültig ist,
- das Kontrollgerät (3) eine GÜLTIG-Meldung an mindestens ein vorhandenes Anzeigegerät (2, 4, 5, 7) sendet, wenn das vorliegende E-Ticket als gültig erkannt worden ist,
- das Anzeigegerät (2, 4, 5, 7) die Gültigkeit des E-Tickets anzeigt.

2. Verfahren nach Patentanspruch 1 für die Kontrolle eines mit Hilfe einer App als **logisches** E-Ticket im Smartdevice (2) selber gespeicherten E-Tickets, **dadurch gekennzeichnet, dass** diese App auf diese im Smartdevice (2) selber gespeicherten Daten unmittelbar zugreift.

3. Verfahren nach Patentanspruch 1 für die Kontrolle eines als **physisches** E-Ticket auf einer Smartcard (8) gespeicherten E-Tickets, **dadurch gekennzeichnet, dass**
- diese Smartcard (8) in die Nähe des Smartdevices (2) gebracht wird,
- das Smartdevice (2) mit Hilfe dieser App auf die auf der Smartcard (8) gespeicherten Daten des E-Tickets zugreift.

4. Verfahren nach einem der Patentansprüche 1 bis 3, **dadurch gekennzeichnet, dass** als Anzeigegerät (2, 4, 5, 7) das **Smartdevice (2)** selber verwendet wird.

5. Verfahren nach einem der Patentansprüche 1 bis 3, **dadurch gekennzeichnet, dass** als Anzeigegerät (2, 4, 5, 7) eine individuelle, je beim jeweiligen Sitz angebrachte **Anzeigevorrichtung (4)** verwendet wird.

6. Verfahren nach einem der Patentansprüche 1 bis 3, **dadurch gekennzeichnet, dass** als Anzeigegerät (2, 4, 5, 7) ein **Gesamtdisplay (5)** verwendet wird, auf welchem die Gültigkeit aller E-Tickets auf allen gewünschten Sitzplätzen (9) gleichzeitig miteinander angezeigt werden.

7. Verfahren nach einem der Patentansprüche 1 bis 3, **dadurch gekennzeichnet, dass** als Anzeigegerät (2, 4, 5, 7) ein **Mobilgerät (7)** des Kontrollpersonals verwendet wird, auf welchem die Gültigkeit aller E-Tickets auf allen gewünschten Sitzplätzen (9) gleichzeitig miteinander angezeigt werden.

8. Verfahren nach einem der Patentansprüche 4 bis 7, **dadurch gekennzeichnet, dass mindestens zwei** dieser Anzeigegeräte (2, 4, 5, 7) **gleichzeitig** verwendet werden.

9. Verfahren nach einem der Patentansprüche 1 bis 8, **dadurch gekennzeichnet, dass**
- das Smartdevice (2) in regelmässigen Abständen HELLO-Meldungen aussendet,
- das Kontrollgerät (3) diese HELLO-Meldungen empfängt,
- das Kontrollgerät (3) das Eintreffen und das Ausbleiben dieser HELLO-Meldungen für die Feststellung miteinbezieht, ob das jeweils vorliegende E-Ticket auf dem betreffenden Streckenabschnitt gültig ist.

10. **Vorrichtung** zur Kontrolle von E-Tickets von Reisenden in einem Verkehrsmittel (10), dessen Position mit Hilfe geeigneter Mittel wie eines Zugleitsystems, einer Abfrage in einer Datenbank (6) oder über ein satellitengestütztes Positionierungssystem bekannt ist, mit einer Vielzahl von Sitzplätzen (9), welche alle je individuell mit einem elektronisch lesbaren Sitzplatz-Tag (1) bezeichnet sind, unter Verwendung eines Smartdevices (2), auf dem eine Software-Applikation (App) gespeichert ist, mit deren Hilfe das Smartdevice (2) auf die relevanten Daten eines E-Tickets eines Reisenden zugreifen kann,
**dadurch gekennzeichnet, dass**
- in diesem Smartdevice (2) Mittel vorhanden sind, mit welchen der Sitzplatz-Tag (1) elektronisch gelesen werden kann,
- ein Kontrollgerät (3) vorhanden ist, das über Mittel verfügt, mit welchen es mit dem Smartdevice (2) drahtlos kommunizieren kann,
- dieses Smartdevice (2) über Mittel verfügt, mit welchen es mit dem Kontrollgerät (3) drahtlos kommunizieren kann,
- eine zentrale Datenbank (6) vorhanden ist,
- eine Netzwerkverbindung zwischen dem Kontrollgerät (3) und der zentralen Datenbank (6) vorhanden ist,
- das Kontrollgerät (3) eine Rechnereinheit enthält, mit welcher Daten aus der zentralen Datenbank (6) und den bekannten Daten über die Position des Verkehrsmittel mit Daten aus dem Smartdevice (2) zusammen verarbeitet werden können und der Gültigkeitszustand des E-Tickets auf dem betreffenden Streckenabschnitt bestimmt werden kann,
- dieses Kontrollgerät (3) über Mittel verfügt, mit welchen es mit einem Anzeigegerät (2, 4, 5, 7) kommunizieren kann,
- diese Anzeigegeräte (2, 4, 5, 7) Mittel enthalten, mit welchem der Gültigkeitszustand des E-Tickets dargestellt werden kann.

11. Vorrichtung nach Patentanspruch 10 für die Kontrolle eines mit Hilfe einer App als **logisches** E-Ticket im Smartdevice (2) selber gespeicherten E-Tickets, **dadurch gekennzeichnet, dass** das Smartdevice (2) Mittel enthält, mit deren Hilfe es, durch die App gesteuert, auf die relevanten Daten dieses in diesem Smartdevice (2) gespeicherten logischen E-Tickets unmittelbar zugreifen kann.

12. Vorrichtung nach Patentanspruch 10 für die Kontrolle eines als **physisches** E-Ticket auf einer Smartcard (8) gespeicherten E-Tickets, **dadurch gekennzeichnet, dass**
- die Smartcard (8) sich in unmittelbarere Nähe des Smartdevices (2) befindet,
- das Smartdevice (2) Mittel enthält, mit deren Hilfe es, durch die App gesteuert, auf die relevanten Daten dieses auf dieser Smartcard (8) gespeicherten E-Tickets zugreifen kann.

13. Vorrichtung nach einem der Patentansprüche 10 bis 12, **dadurch gekennzeichnet, dass** als Anzeigegerät (2, 4, 5, 7) das **Smartdevice (2)** selber vorhanden ist.

14. Vorrichtung nach einem der Patentansprüche 10 bis 12, **dadurch gekennzeichnet, dass** als Anzeigegerät (2, 4, 5, 7) eine individuelle, je beim jeweiligen Sitzplatz (9) vorhandene **Anzeigevorrichtung (4)** vorhanden ist.

15. Vorrichtung nach einem der Patentansprüche 10 bis 12, **dadurch gekennzeichnet, dass** als Anzeigegerät (2, 4, 5, 7) ein **Gesamtdisplay (5)** vorhanden ist.

16. Vorrichtung nach einem der Patentansprüche 10 bis 12, **dadurch gekennzeichnet, dass**
- als Anzeigegerät (2, 4, 5, 7) ein **Mobilgerät (7)** des Kontrollpersonals vorhanden ist,
- dieses Mobilgerät (7) Mittel enthält, mit welchen die Gültigkeit aller E-Tickets auf allen gewünschten Sitzplätzen (9) gleichzeitig miteinander angezeigt werden können.

17. Vorrichtung nach einem der Patentansprüche 13 bis 16, **dadurch gekennzeichnet, dass** mindestens zwei dieser Anzeigegeräte (2, 4, 5, 7) vorhanden sind.

18. Vorrichtung nach einem der Patentansprüche 10 bis 17, **dadurch gekennzeichnet, dass**
- das Smartdevice (2) Mittel enthält, um in regelmässigen Abständen HELLO-Meldungen auszusenden,
- das Kontrollgerät (3) Mittel enthält, um diese HELLO-Meldungen zu empfangen,
- das Kontrollgerät (3) Mittel enthält, um aus dem Eintreffen oder dem Ausbleiben dieser HELLO-Meldungen, zusammen mit der bekannten Position des Verkehrsmittels (10), den Daten aus der zentralen Datenbank (6) und den vom Smartdevice (2) übermittelten Daten, feststellen zu können, ob das jeweils vorliegende E-Ticket auf dem betreffenden Streckenabschnitt gültig ist.
